# EUROPEAN PATENT APPLICATION

(11) **EP 1 026 064 A1**
(43) Date of publication of application: **09.08.2000**
(21) Application number: 00300794.5
(22) Date of filing: 02.02.2000
(51) Int. Cl.: B62B 7/14, B62B 9/12

(54) **Adaptor for child safety seat**

(30) Priority: 05.02.1999 GB 9902448
(71) Applicant: Britax-Excelsior Limited, Warwick CV34 6DE (GB)
(72) Inventor: Tomasi, Ivan, 30077 Altavilla Vicentina (Fr. Tavern.) (IT)
(74) Representative: Hollinghurst, Antony

(57) **Abstract**

A perambulator chassis commonly has a pair of parallel generally horizontal support rails (30,32) intended to support a perambulator body. An adaptor (50) for mounting a child's car seat on such a chassis consists of a rectangular frame each side members of which has a first portion (54,56) inclined at an obtuse angle to the second portion (58,60). The second portions (58,60) of the side members have laterally projecting formations (68-74) which engage with notches (40,42) in the upper edges of the support rails (30,32) of the perambulator chassis.

## Description

This invention relates to an adaptor for mounting a child's car seat on a perambulator chassis of the type having a pair of parallel generally horizontal support rails intended to have a perambulator body mounted thereon. A perambulator chassis of this type is disclosed in GB-A-2056376.

It is already known to mount a child's car safety seat on a pushchair chassis of the type described in EP-A-0422812, which has a rectangular frame pivotally mounted for angular movement about a transverse horizontal axis between a horizontal position suitable for supporting a pram body or carry cot, and an inclined position suitable for supporting a fabric pushchair seat body. When a car safety seat is to be mounted on such a chassis, the rectangular frame is set in its inclined position so that one of the transverse bars of this frame is located substantially further from the ground than the other transverse bar. The lower transverse bar is engaged by slots in a bottom part of the child safety seat, while the upper bar is engaged by a clip mounted on the upper part of the rear side of the backrest of the car safety seat. A car safety seat of this type is sold by the applicants under the registered trade mark ROCK-A-TOT.

It is an object of the invention to enable a child's car safety seat to be fitted to a chassis of the type disclosed in GB-A-2056376, which does not have a pivotally mounted frame.

According to the invention, an adaptor of the type described above comprises a rectangular frame having a pair of mutually parallel side members each of which has a first portion and a second portion, the first portion of each side member being inclined at an obtuse angle to the second portion, the frame further comprising a first transverse member interconnecting the first portions of the side members and a second transverse member interconnecting the second portions of the side members, the second portions of the side members having laterally projecting formations adapted to engage with complementary formations on the horizontal rails of the perambulator chassis.

Preferably, the side members and the first transverse member comprise respective parts of a U-shaped frame member having the ends of its limbs interconnected by the second transverse member.

In use, a child safety seat of the type described above is mounted on the adaptor with the slots below its seat portion engaging with the second transverse member and the clip on the backrest engaging with the first transverse member.

The invention also provides an infant travel system comprising a pram chassis in combination with a child car safety seat and an adaptor as described above.

An embodiment of the invention will now be described by way of example with reference to the accompanying drawings, in which:
Figure 1 is an exploded perspective view of a perambulator chassis, a child car seat having a carrying handle, and an adaptor in accordance with the invention for connecting the child car seat to the chassis;
Figure 2 is a perspective view of the assembly shown in Figure 1 with the adaptor mounted on the chassis and the car seat mounted on the adaptor but shown in chain-dotted lines;
Figure 3 is a scrap side view illustrating the connection mechanism on the chassis which engages with the adaptor;
Figure 4 is a perspective view similar to Figure 2 but with the child car seat shown in the solid lines but with its carrying handle shown in chain-dotted lines and partially broken away;
Figure 5 is a side perspective view showing the connection between the child car seat and the adaptor; and
Figure 6 is a perspective view from behind showing another aspect of the connection between the child car seat and the adaptor.

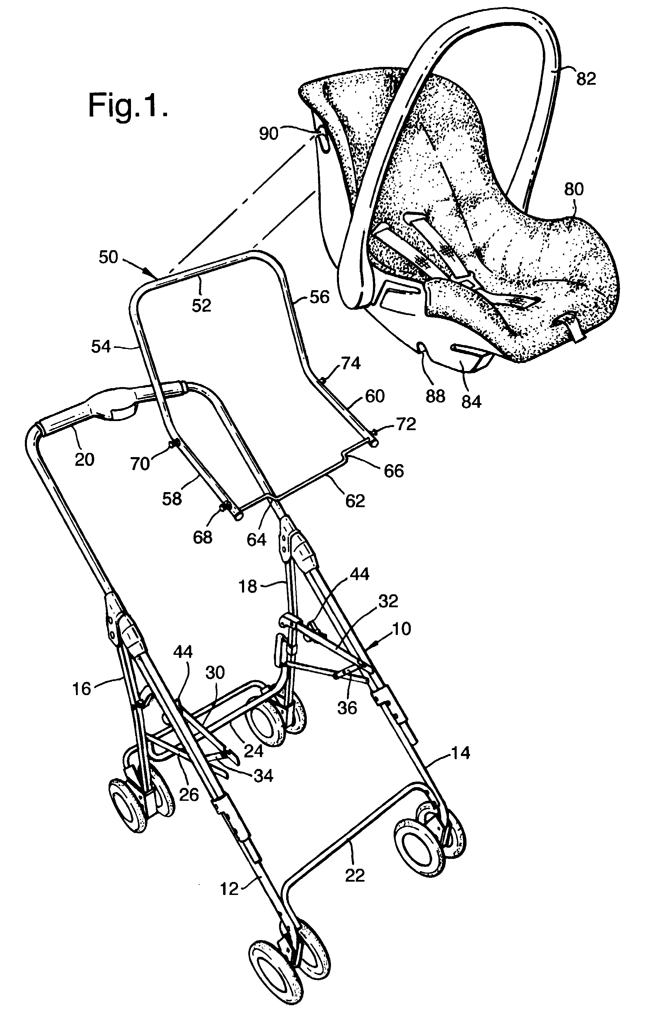

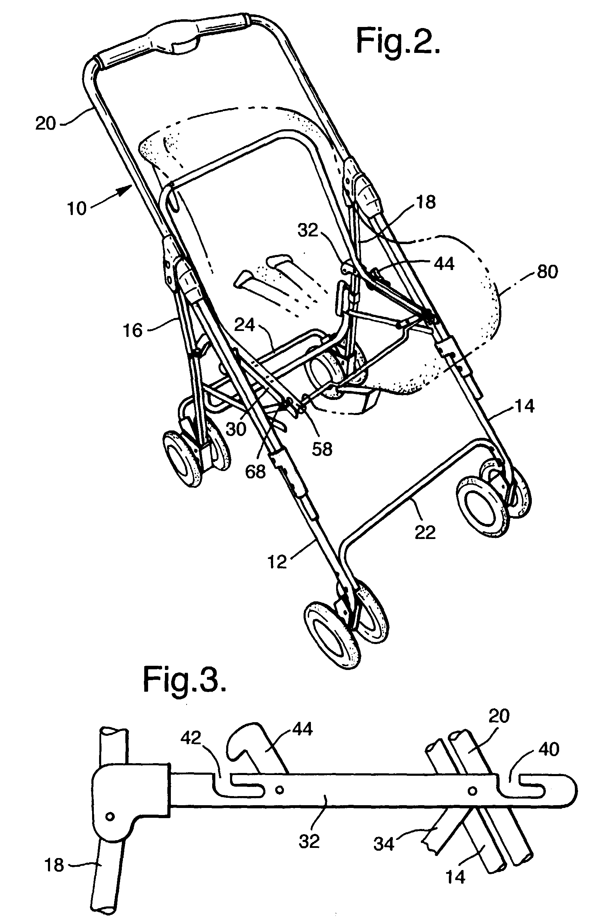

Referring to Figures 1 and 2, a perambulator chassis 10 comprises a pair of front legs 12 and 14, a pair of rear legs 16 and 18 and a U-shaped handle 20. The front legs 12 and 14 are interconnected by a front transverse member 22 and the rear legs 16 and 18 are interconnected by a rear transverse member 24.

Each front leg 12, 14 is connected to the corresponding rear leg 16, 18 by a respective strut 26, 28. Each rear leg 16, 18 is pivotally connected to the rear end of a respective support rail 30, 32 which has its front end supported on the corresponding strut 26, 28 by a respective link 34, 36. This type of pushchair chassis is well known and will not be described in more detail.

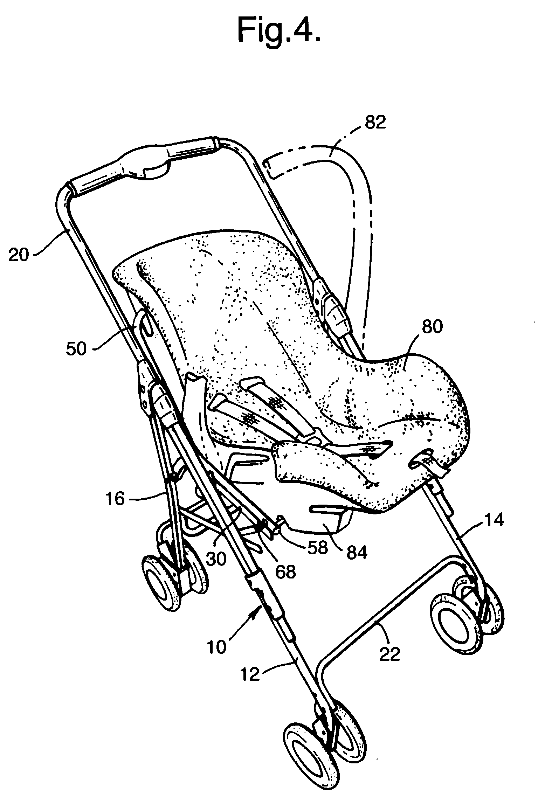

As can best be seen from Figure 3, the support rail 32 has front and rear L-shaped notches 40 and 42 extending downwardly from its upper edge and then horizontally forwardly. A latch 44 is pivotally mounted on the rail 32 adjacent to the front end of the rear notch 42 for angular movement between an open position as illustrated and a closed position in which it covers the vertical part and the rear end of the horizontal part of the notch 42. Similar notches 40 and 42 and a similar catch 44 are formed on the other horizontal rail 30. Conventionally, a pram body (not shown) which is to be mounted on the rails 30 and 32 is provided with laterally projecting studs adapted to engage in the notches 40 and 42 and to be retained therein by the catches 44.

Reverting to Figures 1 and 2, an adaptor 50 in accordance with the invention comprises a U-shaped tubular member having a central portion 52 and side limbs which are bent at intermediate locations along their lengths so as to have mutually parallel intermediate portions 54 and 56 and mutually parallel end portions 58 and 60. The free ends of the end portions 58 and 60 are interconnected by a transverse member 62, the central part of which is offset from the central portion 52 of the U-shaped member so as to form shoulders 64 and 66. The end portion 58 of one limb of the adaptor 50 has two outwardly projecting studs 68 and 70 which are spaced apart by the same distance as the notches 40 and 42 on the support rail 30 and are dimensioned to be engageable therein. Similar studs 72 and 74 are provided on the other end portion 60 of the other limb.

In order to mount the adaptor 50 on the chassis 10, the studs 68 to 74 are engaged in the vertical portions of the notches 40 and 42. Next, the adaptor 50 is pushed forwardly relative to the chassis 10 so that the studs 68 to 74 abut against the front ends of the notches 40 and 42 where they are retained by the catches 44 as described above.

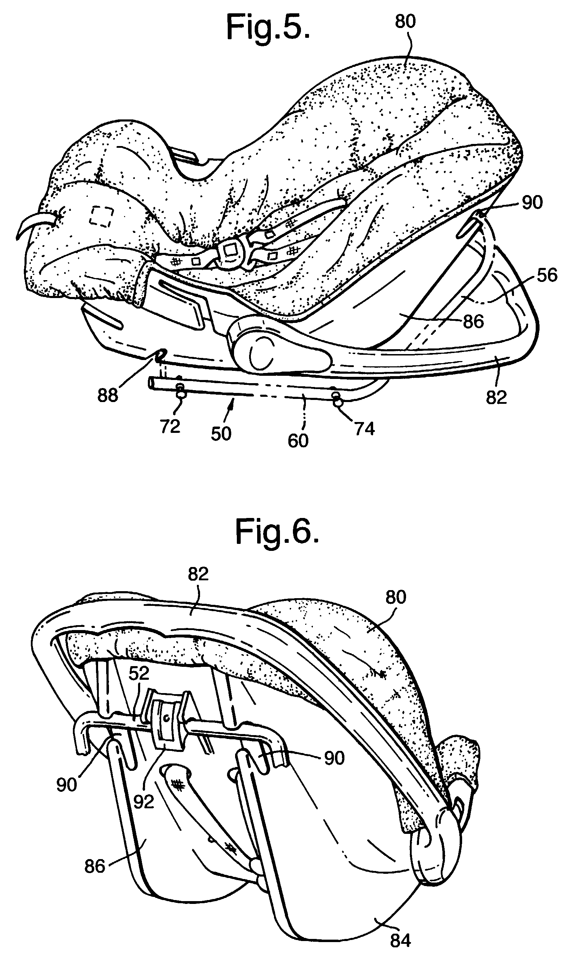

Referring now to Figures 4 to 6, a child safety seat has a seat body 80 with a pivotally mounted carrying handle 82 and a pair of integrally moulded ribs 84 and 86 projecting from the back and bottom of the seat body 10 to serve as rockers when the seat body 80 is placed on a flat surface. Each of the ribs 84 and 86 has a slot 88 near its bottom front end which is inclined upwardly and rearwardly, together with a second slot 90 near its upper rear end. The slots 88 and 90 are spaced apart so that when the transverse member 62 of the adaptor 50 is engaged in the slots 88, the transverse part 52 of the U-shaped member can engage in the slot 90. A clip 92 (Figure 6) which is mounted on the back of the seat body 80 between the slots 90, engages round the transverse part 52 so as to retain it in the slots 90. The transverse member 62 is retained in engagement with the slots 88 due to their inclined orientation. The ribs 84 and 86 engage with the shoulders 64 and 66 on the transverse member 62, thus restricting lateral movement of the seat body 80 on the adaptor 50.

## Claims

1. An adaptor for mounting a child's car seat on a perambulator chassis having a pair of parallel generally horizontal support rails (30, 32) intended to have a perambulator body mounted thereon, characterised in that the adaptor comprises a rectangular frame (50) having a pair of mutually parallel side members each of which has a first portion (54, 56) and a second portion (58, 60), the first portion (54, 56) of each side member being inclined at an obtuse angle to the second portion, the frame further comprising a first transverse member (52) interconnecting the first portions (54, 56) of the side members and a second transverse member (62) interconnecting the second portions (58, 60) of the side members, the second portions (58, 60) of the side members having laterally projecting formations (68-74) adapted to engage with complementary formations (40, 42) on the horizontal rails (30, 32) of the perambulator chassis.

2. An adaptor according to claim 1, wherein the side members (54, 58; 56, 60) and the first transverse member (52) comprise respective parts of a U-shaped frame member having the ends of its limbs interconnected by the second end member (62).

3. An adaptor according to claim 1 or 2, wherein the second transverse member (62) has shoulders (64, 66) arranged to restrict later movement of a child's car seat thereon.

4. An infant travel system comprising a pram chassis in combination with a child car safety seat and an adaptor (50) as claimed in claim 1, 2 or 3.
